# EUROPÄISCHE PATENTSCHRIFT

(11) **EP 3 223 257 B1**
(45) Veröffentlichungstag und Bekanntmachung des Hinweises auf die Patenterteilung: **04.11.2020**
(21) Anmeldenummer: 17161562.8
(22) Anmeldetag: 17.03.2017
(51) Int. Cl.: G08G 1/0965, G08G 1/087, G08G 1/081, G08G 1/0969, G01C 21/34, G01C 21/36

(54) **VERFAHREN UND VORRICHTUNG ZUR BEEINFLUSSUNG EINES VERKEHRSLEITSYSTEMS**
METHOD AND DEVICE FOR INFLUENCING A TRAFFIC CONTROL DEVICE
PROCÉDÉ ET DISPOSITIF DESTINÉS À INFLUENCER UN SYSTÈME DE GESTION DU TRAFIC

(30) Priorität: 24.03.2016 DE 102016105558
(43) Veröffentlichungstag der Anmeldung: 27.09.2017
(73) Patentinhaber: SMEV AG Smart Mobility Evolution, 15236 Frankfurt/Oder (DE)
(72) Erfinder: Zeplin, Wolf Peter, 40667 Meerbusch (DE); Trostel, Ludwig, 85748 Garching (DE)
(74) Vertreter: Schlimme, Wolfram

(56) Entgegenhaltungen:
- EP-A1- 2 618 320
- WO-A2-2005/029437
- DE-A1-102011 107 881
- DE-A1-102014 105 474
- US-A1- 2005 104 745

## Beschreibung

### TECHNISCHES GEBIET

Die vorliegende Erfindung betrifft ein Verfahren zur Beeinflussung eines Verkehrsleitsystems gemäß dem Oberbegriff des Patentanspruchs 1. Sie betrifft weiterhin eine Vorrichtung zur Durchführung eines solchen Verfahrens gemäß dem Oberbegriff des Patentanspruchs 12 sowie ein Computerprogrammprodukt zur Durchführung eines derartigen Verfahrens.

### HINTERGRUND DER ERFINDUNG

Insbesondere in städtischen Ballungsgebieten nimmt die Verkehrsdichte ständig zu, wobei es nicht nur in Spitzenzeiten häufig zu Verkehrsstaus kommt. Für die Fahrer von Einsatzfahrzeugen mit Wegerecht, beispielsweise Polizeifahrzeugen, Feuerwehrfahrzeugen oder Fahrzeugen des Rettungsdienstes, bedeutet dies nicht nur eine hohe Stressbelastung, sondern es werden außerdem die Anfahrtszeiten für derartige Fahrzeuge mit Wegeberechtigung zu ihren Einsatzorten deutlich verlängert. Hinzu kommt, dass bei hoher Verkehrsbelastung auch das Risiko ansteigt, dass ein Einsatzfahrzeug mit Wegerecht beim Überqueren von Kreuzungen oder Straßeneinmündungen unter Nutzung des Wegerechts mit anderen, ansonsten vorfahrtberechtigten Fahrzeugen kollidiert.

### STAND DER TECHNIK

Es ist daher bereits mehrfach vorgeschlagen worden, Einsatzfahrzeugen mit Wegerecht auf ihrem Weg zum Einsatzort nicht nur das Wegerecht durch Einsatz von Sondersignalen (Blaulicht, Martinshorn) einzuräumen, sondern auch Verkehrs-Wechsellichtzeichenanlagen (Ampeln) bei Annäherung des Einsatzfahrzeugs auf "freie Fahrt" (grün) zu schalten.

Die DE 28 55 625 A1 zeigt und beschreibt eine Anordnung zur Steuerung von Verkehrs-Wechsellichtzeichenanlagen, bei der vom Fahrzeug aus ein Funksignal zur Freischaltung der Verkehrs-Wechsellichtzeichenanlage ausgesandt werden kann. Eine derartige Anordnung erfordert jedoch, dass sowohl das Fahrzeug als auch die entsprechenden Verkehrs-Wechsellichtzeichenanlagen oder mit diesen zusammenhängende Schalteinrichtungen mit entsprechenden Funksendern und Funkempfängern ausgestattet werden müssen, was einen hohen apparativen Aufwand und Kostenaufwand verursacht.

Die DE 195 08 043 C1 zeigt und beschreibt eine Steueranordnung für Verkehrssignale, bei der ein Einsatzfahrzeug mit einer Sendereinheit versehen ist, über die mittels eines im Einsatzfahrzeug vorgesehenen Navigationsempfängers ermittelte Standortkoordinaten des Einsatzfahrzeugs an einen Ampelrechner gesandt werden, der die Richtung und die Geschwindigkeit des sich annähernden Einsatzfahrzeugs ermittelt und bei Annäherung des Einsatzfahrzeugs an eine Ampel diese Ampel in Fahrtrichtung auf grün schaltet.

Aus der DE 196 01 024 A1 ist ein System zur Optimierung der Fahrzeiten von Fahrzeugen mit Sonderrechten bekannt, bei welchem die mittels eines Navigationsempfängers im Einsatzfahrzeug ermittelten Positionsdaten über eine Funkverbindung an einen Verkehrsleitrechner gesandt werden, der daraufhin für die Fahrtstrecke des Einsatzfahrzeugs eine grüne Welle schaltet. Es wird dort auch vorgeschlagen, die Fahrtrichtung oder die Gegenrichtung des Einsatzfahrzeugs vorzeitig vom Verkehr zu befreien, indem eine rote Welle geschaltet wird, die den Verkehr an je einer Ampel vorstaut, um hinter der Ampel eine freie Fahrbahn zu erhalten. Ein Verkehrsleitrechner wird dort dahingehend definiert, dass der Verkehrsleitrechner einzelne lokale Verkehrssteuerrechner, welche wiederum die Ampelanlagen steuern, koordiniert.

Die DE 198 42 912 A1 zeigt und beschreibt ein Verfahren zur Fahrwegfreischaltung für Einsatzfahrzeuge mit Sonderbefugnissen, wobei vom Einsatzfahrzeug regelmäßig die mittels eines Navigationsempfängers ermittelten Positionsdaten des Einsatzfahrzeugs telemetrisch an eine Einsatzleitstelle übertragen werden. Im Einsatzfahrzeug werden die aktuell ermittelten Ortskoordinaten des Einsatzfahrzeugs mit den in einem im Einsatzfahrzeug befindlichen Computer gespeicherten Koordinaten von Lichtsignalanlagen des entsprechenden Territoriums verglichen. Alle auf dem Weg zum Einsatzort befindlichen Lichtsignalanlagen werden in diesem Rechner vorselektiert und in Abhängigkeit von der Fahrgeschwindigkeit des Einsatzfahrzeugs werden Voranmeldesignale an in Fahrtrichtung vor dem Einsatzfahrzeug liegende Ampeln gesandt, wodurch diese auf der Fahrstrecke des Einsatzfahrzeugs gelegenen Ampeln in einen Bereitschaftsmodus gebracht werden. Jeweils die unmittelbar vor dem Einsatzfahrzeug gelegene Ampel erhält dann ein Hauptanmeldesignal, welches ein Umschalten der Ampel auf "freie Fahrt" bewirkt. Diese Vorgehensweise ermöglicht zwar, dass auch kurzfristige Fahrtrichtungsänderungen des Einsatzfahrzeugs (z.B. Wahl einer alternativen Route zum Einsatzort), ohne Rechenleistung auf einen Verkehrsleitrechner zu beanspruchen, sofort für die Schaltung einer grünen Welle zur Verfügung stehen. Allerdings ist nachteilig, dass das Einsatzfahrzeug hierzu mit einem Computer von erheblicher Rechenleistung versehen sein muss und zudem eine Datenbank über die in der örtlichen Straßentopologie vorgesehenen Ampeln in stets aktueller Form aufweisen muss.

Die DE 10 2011 107 881 A1 zeigt und beschreibt ein Verfahren und ein System zur Optimierung von Rettungswegen für Einsatzfahrzeuge. Dabei wird periodisch die Position eines Einsatzfahrzeugs erfasst und einer außerhalb des Fahrzeugs gelegenen zentralen Ermittlungseinrichtung für Wegpunkte zugeführt, die in Kenntnis des Einsatzzielortes einen geeigneten Weg für das Einsatzfahrzeug ermittelt. Auf der Grundlage der auf diese Weise ermittelten voraussichtlichen Fahrtroute des Einsatzfahrzeugs werden dann vorausliegende Ampeln auf eine "grüne Welle" geschaltet. Bei einer Routenänderung des Einsatzfahrzeugs passt die Ermittlungseinrichtung dann die Wegpunkte bzw. die voraussichtliche Route des Einsatzfahrzeugs an und beeinflusst die auf dieser neuen Route vorausliegenden Ampeln. Zusätzlich zur Beeinflussung der Ampelschaltungen wird den Verkehrsteilnehmern auf der vor dem Einsatzfahrzeug liegenden Wegstrecke auf Leittafeln auch das Herannahen eines Einsatzfahrzeugs signalisiert. Es wird auch erwähnt, dass dadurch Verkehrsteilnehmer frühzeitig gewarnt sind und entsprechend die Wege, beispielsweise im Stadtverkehr eine Kreuzung, räumen können.

Die EP 2 618 320 A1 zeigt und beschreibt ein Verkehrssteuerungssystem zur Fahrwegfreischaltung für ein Einsatzfahrzeug. Dabei werden die aktuellen Standortdaten eines Einsatzfahrzeugs an eine Einsatzzentrale übermittelt, die, ausgehend von diesen Standortdaten des Einsatzfahrzeugs und dem bekannten Einsatzfahrtziel, eine Einsatzroute plant und entsprechende Routendaten an eine Verkehrsrechnerzentrale übermittelt. Die Verkehrsrechnerzentrale schaltet dann die auf dieser Einsatzroute gelegenen Ampeln auf eine "grüne Welle". Wenn das Einsatzfahrzeug die ursprünglich bestimmte Einsatzroute verlassen hat, kann eine Anpassung der Einsatzroute durch die Einsatzleitzentrale und damit eine Änderung der Wegfreischaltung durch die Verkehrsrechnerzentrale erfolgen. Auf diese Weise wird eine routenabhängige und dynamische Anschaltung der Freigabephasen an den Lichtsignalen erzielt.

Die US 2005/0104745 A1 zeigt und beschreibt ein Ampelbeeinflussungssystem für Einsatzfahrzeuge, bei welchem ein sich an eine Kreuzung annäherndes Einsatzfahrzeug unmittelbar mit den an der Kreuzung befindlichen Ampeln kommuniziert, um eine entsprechende Wegfreischaltung zu bewirken.

Die nachveröffentlichte DE 10 2014 114 535 A1 zeigt und beschreibt ein Verfahren zur Steuerung von Lichtsignalanlagen an Verkehrsknotenpunkten auf einem Fahrweg eines Einsatzfahrzeugs. Dabei sendet das Einsatzfahrzeug ein Anforderungssignal aus, das von einer innerhalb der Fahrzeugumgebung liegenden Lichtsignalanlage empfangen wird. Diese Lichtsignalanlage schaltet daraufhin aus einem Normalbetrieb in einen Bevorrechtigungsbetrieb, der dem Einsatzfahrzeug am Verkehrsknotenpunkt an dem diese Signalanlage vorgesehen ist, freie Fahrt gewährt. Diesbezüglich wird verwiesen auf Patentanspruch 1, erstes und zweites Strichaufzählungsmerkmal dieser Entgegenhaltung. Das Einsatzfahrzeug beeinflusst daher unmittelbar die auf seinem Fahrweg vorausliegenden Lichtsignalanlagen.

Die DE 10 2014 105 474 A1 betrifft ein Verfahren zur bidirektionalen Kommunikation zwischen einem Einsatzfahrzeug und sonstigen Fahrzeugen. Eine Kommunikation zwischen dem Einsatzfahrzeug und einer Verkehrsleitzentrale mit einer Beeinflussung eines Verkehrsleitsystems und darin enthaltener Wechsellichtzeichenanlagen ist aus dieser Druckschrift nicht bekannt.

### DARSTELLUNG DER ERFINDUNG

Aufgabe der vorliegenden Erfindung ist es, ein Verfahren zur Beeinflussung eines Verkehrsleitsystems zum Zweck einer Vorrangsteuerung für zumindest ein Einsatzfahrzeug mit Wegerecht anzugeben, bei welchem der apparative Aufwand im Einsatzfahrzeug und im Verkehrsleitsystem sowie in den Wechsellichtzeichenanlagen minimiert wird. Insbesondere soll vermieden werden, dass Wechsellichtzeichenanlagen individuell mit Funk-Empfangseinrichtungen und eigenen Computern ausgestattet werden müssen. Ein weiteres Ziel der vorliegenden Erfindung ist es, ein solches Verfahren anzugeben, bei welchem die Gewährleistung der freien Fahrt für das Einsatzfahrzeug weiter verbessert ist, um noch kürzere Anfahrtszeiten zum Einsatzort zu ermöglichen. Schließlich ist es eine Aufgabe der vorliegenden Erfindung, eine Vorrichtung zur Durchführung eines solchen Verfahrens anzugeben und ein Computerprogrammprodukt zur Durchführung eines solchen Verfahrens zu schaffen.

Der auf das Verfahren gerichtete Teil der Aufgabe wird gelöst durch das Verfahren mit den Merkmalen des Patentanspruchs 1.

Dieses Verfahren zur Beeinflussung eines Verkehrsleitsystems mit zumindest einem zentralen Verkehrsleitrechner, der eine Vielzahl von Wechsellichtzeichenanlagen in einem Verkehrswegenetz, beispielsweise das Verkehrswegenetz einer Stadt oder eines Stadtteils, steuert, erfolgt zum Zweck einer Vorrangsteuerung für zumindest ein Einsatzfahrzeug mit Wegerecht, wobei die Beeinflussung des Verkehrsleitsystems auf der Basis von aktuellen Positionsdaten und eines Fahrtrichtungsvektors des zumindest einen Einsatzfahrzeugs durchgeführt wird, um dessen Fahrt auf einer prognostizierten Fahrtroute zu beschleunigen. Das Verfahren weist die folgenden Schritte auf:
a) Bereitstellen von Positionsdaten eines Fahrtziels für das zumindest eine Einsatzfahrzeug;
b) Bereitstellen der aktuellen Positionsdaten und der Daten des aktuellen Fahrtrichtungsvektors des zumindest einen Einsatzfahrzeugs;
c) Prognostizieren einer Fahrtroute für das zumindest eine Einsatzfahrzeug von dessen aktueller Position zur Position des Fahrtziels unter Berücksichtigung der durch den Fahrtrichtungsvektor repräsentierten, vom Fahrer des Einsatzfahrzeugs gewählten Fahrtrichtung;
d) Beeinflussen der die prognostizierte Fahrtrichtung auf der prognostizierten Fahrtroute betreffenden Wechsellichtzeichenanlagen derart, dass die jeweilige Wechsellichtzeichenanlage vor oder bei der prognostizierten Ankunft des zumindest einen Einsatzfahrzeugs den Verkehr in Richtung der prognostizierten Fahrtroute freigibt.

Dabei ist erfindungsgemäß vorgesehen, dass in einem in oder vor dem Schritt d) ausgeführten Schritt d') weitere, nicht unmittelbar die prognostizierte Fahrtrichtung des Einsatzfahrzeugs betreffende Wechsellichtzeichenanlagen in der Umgebung der vor dem Einsatzfahrzeug gelegenen, eine prognostizierte Fahrtrichtung auf der prognostizierten Fahrtroute betreffenden Wechsellichtzeichenanlagen derart geschaltet werden, dass in einem Fahrkorridor für das zumindest eine Einsatzfahrzeug auf der Fahrbahn der prognostizierten Fahrtroute befindliche Fahrzeuge den Fahrkorridor verlassen können und keine Fahrzeuge in den Fahrkorridor hinein fahren können bis das zumindest eine Einsatzfahrzeug diesen Ort erreicht, so dass das zumindest eine Einsatzfahrzeug einen Wirkungsbereich der Vorrangsteuerung entlang der prognostizierten Fahrtroute vor sich herschiebt, in welchem zusätzlich zu einer grünen Welle für das zumindest eine Einsatzfahrzeug ein Abfließen des Verkehrs aus dem Fahrkorridor entlang der prognostizierten Fahrtroute weg bewirkt wird. Der Fahrkorridor entspricht dabei der Fahrbahn oder dem Bereich der Fahrbahn oder zumindest der Fahrspur entlang der prognostizierten Fahrtroute, die beziehungsweise der für die sichere, schnelle Durchfahrt des zumindest einen Einsatzfahrzeugs benötigt wird.

### VORTEILE

Das erfindungsgemäße Verfahren unterscheidet sich vom oben abgehandelten Stand der Technik darin, dass nicht nur eine lineare grüne Welle entlang der vorgesehenen Fahrtroute des Einsatzfahrzeugs geschaffen wird, sondern dass auch Wechsellichtzeichenanlagen in der Nähe der vorgesehenen oder prognostizierten Fahrtroute des zumindest einen Einsatzfahrzeugs ebenfalls beeinflusst werden. Diese Beeinflussung der nicht unmittelbar die vorgesehene Fahrtrichtung des Einsatzfahrzeugs betreffenden Wechsellichtzeichenanlagen in einem voraus liegenden Streckenabschnitt der Fahrtroute und in dessen Nachbarschaft in der erfindungsgemäßen Weise bewirkt, dass sich die Fahrkorridor in Fahrtrichtung vor dem Einsatzfahrzeug leert. Gleichzeitig wird verhindert, dass Fahrzeuge in den Fahrkorridor für das zumindest eine Einsatzfahrzeug hineinfahren und diesen möglicherweise blockieren.

Bildlich gesprochen erhält dadurch das zumindest eine Einsatzfahrzeug auf seiner prognostizierten Fahrtroute nicht nur formal eine grüne Welle, sondern es erhält durch die erfindungsgemäße Vorrangsteuerung auch im Wesentlichen einen freien Fahrkorridor, indem es einen Wirkungsbereich dieser Vorrangsteuerung entlang der prognostizierten Fahrtroute und gegebenenfalls links und rechts davon vor sich herschiebt, in welchem zusätzlich zur grünen Welle für das zumindest eine Einsatzfahrzeug durch entsprechende Schaltung der Wechsellichtzeichenanlagen ein Abfließen des Verkehrs aus dem Fahrkorridor entlang der prognostizierten Fahrtroute weg bewirkt wird. Dieser Wirkungsbereich vor dem Einsatzfahrzeug bildet eine "Wolke" von beeinflussten Wechsellichtzeichenanlagen und kann daher auch als "grüne Wolke" bezeichnet werden.

Die Flächenausdehnung dieses Wirkungsbereichs ist vorzugsweise nicht statisch, sondern an die Straßentopologie entlang der prognostizierten Fahrtroute und/oder an das aktuelle Verkehrsaufkommen angepasst. In seiner kleinsten Ausdehnung kann der Wirkungsbereich beispielsweise nur die Ampeln an einer zu überquerenden Straßenkreuzung umfassen. Bei Kreuzungen von mehrspurigen Straßen mit mehreren Abbiegespuren und einer entsprechend komplexen Ampelschaltung kann der Wirkungsbereich größer gewählt werden, um alle Wechsellichtzeichenanlagen im Großbereich der Kreuzung zu umfassen. Der Wirkungsbereich kann aber beispielsweise auch auf Wechsellichtzeichenanlagen in Nebenstraßen und/oder an lateral benachbarten Kreuzungen ausgedehnt werden, wenn dies aufgrund der Verkehrsführung oder des Verkehrsflusses geboten ist.

Eine solche bezüglich ihres flächigen Wirkungsbereichs anpassbare Vorrangsteuerung lässt sich auch als "dynamische grüne Wolke" bezeichnen.

Dadurch, dass die Beeinflussung des Verkehrsleitsystems nicht nur unter der Berücksichtigung der aktuellen Positionsdaten des zumindest einen Einsatzfahrzeugs, sondern auch von dessen Fahrtrichtungsvektor erfolgt, ist der Fahrer des Einsatzfahrzeugs nicht an eine von außen fest vorgegebene Fahrtroute gebunden, sondern er kann in Abhängigkeit von der jeweiligen Situation und dem Verkehrsgeschehen vor Ort selbständig seine Fahrtroute wählen. Der Wirkungsbereich ("grüne Wolke"), den das Einsatzfahrzeug quasi vor sich her schiebt, wandert dann mit dem Fahrtrichtungsvektor des Einsatzfahrzeugs mit.

Die erfindungsgemäße Vorrangsteuerung ist nicht auf Wechsellichtzeichenanlagen für den Verkehr auf einem Straßennetz beschränkt, sondern kann jegliche Art von Wechsellichtzeichenanlagen in einem Verkehrswegenetz umfassen, beispielsweise auch Signale eines Schienenwegenetzes und/oder Schranken und Lichtzeichenanlagen an schienengleichen Bahnübergängen. So können beispielsweise auch Signale für Schienenfahrzeuge auf HALT geschaltet werden, um dem zumindest einen Einsatzfahrzeug das gefahrlose Überqueren eines schienengleichen Bahnübergangs zu ermöglichen.

Weitere bevorzugte und vorteilhafte Ausgestaltungsmerkmale des erfindungsgemäßen Verfahrens sind Gegenstand der Unteransprüche 2 bis 11.

Von Vorteil ist dabei, wenn die Schaltung der Wechsellichtzeichenanlagen in der prognostizierten Fahrtrichtung auf der prognostizierten Fahrtroute derart erfolgt, dass Fahrzeuge des Gegenverkehrs und/oder des Querverkehrs oder im Fahrkorridor befindliche abbiegewillige Fahrzeuge den Fahrkorridor verlassen können, bevor das zumindest eine Einsatzfahrzeug diesen Ort erreicht hat. Dadurch wird der Fahrkorridor rechtzeitig von Ankunft des Einsatzfahrzeugs freigeräumt.

Weiter vorteilhaft ist es, wenn die Schaltung der Wechsellichtzeichenanlagen in der prognostizierten Fahrtrichtung auf der prognostizierten Fahrtroute derart erfolgt, dass Fahrzeuge des Querverkehrs oder des Abbiegeverkehrs nicht in den Fahrkorridor hinein fahren können, bis das zumindest eine Einsatzfahrzeug diesen Ort passiert hat. Auf diese Weise wird verhindert, dass Fahrzeuge in den Fahrkorridor hinein fahren.

In einer vorteilhaften Weiterbildung des erfindungsgemäßen Verfahrens erfolgt die Freigabe des Verkehrs in Richtung der prognostizierten Fahrtroute in Abhängigkeit von der Verkehrsdichte auf der prognostizierten Fahrtroute so rechtzeitig vor der prognostizierten Ankunft des zumindest einen Einsatzfahrzeugs an der jeweiligen die prognostizierte Fahrtrichtung auf der prognostizierte Fahrtroute betreffenden Wechsellichtzeichenanlage, dass sich im Fahrkorridor stehende Fahrzeuge in Bewegung setzen können und sich somit stehender Verkehr bei der Ankunft des zumindest einen Einsatzfahrzeugs in fließenden Verkehr gewandelt hat.

Diese Weiterbildung des Verfahrens ermöglicht es, dass sich vorhandene Staus zumindest so weit auflösen, dass sich die ehemals im Stau stehenden Fahrzeuge in Bewegung setzen und aus dieser Bewegung heraus schnell eine Rettungsgasse für das zumindest eine Einsatzfahrzeug bilden können.

Von Vorteil ist es auch, wenn die Wechsellichtzeichenanlagen entlang der prognostizierten Fahrtroute derart geschaltet werden, dass an einer Straßeneinmündung, an der die prognostizierte Fahrtrichtung der prognostizierten Fahrtroute des zumindest einen Einsatzfahrzeugs in eine einmündende Straße abknickt, Lichtzeichen für zu Fuß Gehende oder für Rad Fahrende zum Beispiel durch Anzeige von Rotlicht auf HALT geschaltet werden, so dass der Fußgängerverkehr und/oder der Fahrradverkehr über die einmündende Straße angehalten wird. Dies ermöglicht es dem zumindest einen Einsatzfahrzeug schnell abzubiegen, ohne wegen des Fußgänger- oder Radfahrerverkehrs anhalten zu müssen. Dadurch wird außerdem die Gefahr von Abbiegeunfällen mit dem Einsatzfahrzeug reduziert.

Bevorzugter Weise werden die Schritte b) bis d) und d') in zeitlichen Intervallen, vorzugsweise permanent, wiederholt. Eine solche rekursive Durchführung des Verfahrens ermöglicht eine dynamische und an die aktuelle Fahrtroute und Fahrgeschwindigkeit des zumindest einen Einsatzfahrzeugs angepasste Vorrangschaltung.

Besonders vorteilhaft ist es, wenn das Bereitstellen der aktuellen Positionsdaten und der Daten des aktuellen Fahrtrichtungsvektors des zumindest einen Einsatzfahrzeugs im Schritt b) auf einem Einsatzcomputer, vorzugsweise einem mobilen Endgerät, erfolgt, den eine berechtigte Person als Insasse des zumindest einen Einsatzfahrzeugs mit sich führt, und wenn diese Daten zusammen mit Authentifizierungsdaten dieser berechtigten Person an den Verkehrsleitrechner übertragen werden. Ein solcher Einsatzcomputer kann auf einfache Weise in ein Einsatzfahrzeug eingebaut oder nachgerüstet werden.

Eine mobile Lösung mittels eines mobilen Endgeräts macht hingegen eine Ausrüstung eines jeden in Frage kommenden Einsatzfahrzeugs mit entsprechender Hard- und Software für die Durchführung des erfindungsgemäßen Verfahrens überflüssig, wodurch erhebliche Kosten eingespart werden können. Es werden nur noch einige mobile Endgeräte, zum Beispiel Tabletcomputer oder Mobiltelefone (Smartphones), benötigt, auf denen eine das Verfahren implementierende Software ("App") lauffähig gespeichert ist. Mit derartigen dienstlichen mobilen Endgeräten sind die Einsatzkräfte in der Regel ausgestattet, so dass keine zusätzliche Hardware mehr erforderlich ist.

Dabei ist es besonders von Vorteil, wenn das Prognostizieren der Fahrtroute für das zumindest eine Einsatzfahrzeug ebenfalls auf dem Einsatzcomputer mittels einer darauf laufenden Navigationssoftware erfolgt und wenn die Übertragung der die prognostizierte Fahrtroute repräsentierenden Daten vom Einsatzcomputer direkt zum Verkehrsleitrechner erfolgt. Smartphones und Tabletcomputer sind in der Regel bereits mit einer darauf lauffähig gespeicherten Navigationssoftware ausgestattet, so dass auch die Anschaffung von separaten Navigationssystemen eingespart werden kann.

Gemäß einer anderen vorteilhaften Ausführungsform des erfindungsgemäßen Verfahrens, die mit anderen Ausführungsformen kombinierbar ist, werden die aktuellen Positionsdaten und der Fahrtrichtungsvektor des zumindest einen Einsatzfahrzeugs - zusätzlich zur Übertragung an den Verkehrsleitrechner oder an einen mit dem Verkehrsleitrechner funktional verbundener Computer - unmittelbar oder mittelbar an autonome Fahrzeuge übertragen, die sich auf der prognostizierten Fahrtroute des Einsatzfahrzeugs befinden, und diese autonomen Fahrzeuge werden dadurch veranlasst, die für das zumindest eine Einsatzfahrzeug benötigte Fahrbahn zu räumen oder gar nicht erst zu befahren. Autonome Fahrzeuge, also Kraftfahrzeuge, die ohne Fahrer am Straßenverkehr teilnehmen, also führerlos autonom fahren oder halten, werden auf diese Weise frühzeitig und unabhängig von eigenen Onboard-Sensoren vom Herannahen des zumindest einen Einsatzfahrzeugs informiert und veranlasst, die für das zumindest eine Einsatzfahrzeug freizuhaltende Fahrbahn zu räumen oder gar nicht erst zu befahren. So kann zum Beispiel ein solches autonomes Fahrzeug auf den Empfang dieser Information vom herannahenden Einsatzfahrzeug hin automatisch in einen priorisierten Fahrmodus umgeschaltet werden, in welchem es selbsttätig an den nächstgelegenen Fahrbahnrand fährt und dort verharrt, sofern Sensoren des autonomen Fahrzeugs neben dem Fahrzeug eine freie Fahrbahnbreite detektieren, die größer als eine vorgegebene, für die Durchfahrt von Einsatzfahrzeugen erforderliche Breite ist.

Vorteilhaft ist dabei, wenn die Übertragung der aktuellen Positionsdaten und des Fahrtrichtungsvektors des zumindest einen Einsatzfahrzeugs an autonome Fahrzeuge mittelbar über zumindest einen zentralen Telematikrechner erfolgt, mit dem die autonomen Fahrzeuge zur Datenübertragung verbunden sind.

Weiterhin von Vorteil kann es sein, wenn die Übertragung der aktuellen Positionsdaten und des Fahrtrichtungsvektors des zumindest einen Einsatzfahrzeugs an autonome Fahrzeuge direkt vom Einsatzfahrzeug aus erfolgt. Dadurch wird der Weg dieser Information nicht über den zentralen Verkehrsleitrechner sondern vom Einsatzfahrzeug direkt oder über den Telematikrechner zu den autonomen Fahrzeugen geroutet, wodurch eine schnellerer Informationsfluss erzielt werden kann.

Der auf die Vorrichtung gerichtete Teil der Aufgabe wird gelöst durch eine Vorrichtung mit den Merkmalen des Patentanspruchs 12.

Die Vorrichtung zur Durchführung des erfindungsgemäßen Verfahrens umfasst ein (in der Regel bereits vorhandenes) Verkehrsleitsystem, das zumindest einen Verkehrsleitrechner und eine Vielzahl von Wechsellichtzeichenanlagen in einem Verkehrswegenetz aufweist, wobei der Verkehrsleitrechner die Wechsellichtzeichenanlagen im Verkehrswegenetz steuert. Die Vorrichtung, die ein System zur Beeinflussung eines Verkehrsleitsystems bildet, weist weiterhin zumindest ein Einsatzfahrzeug mit Wegerecht auf, dessen Fahrt auf einer prognostizierten Fahrtroute mittels des Verfahrens beschleunigt werden soll. Weiterhin sind zumindest ein Positionsdatengeber und ein Fahrtrichtungsvektordatengeber sowie ein mit diesen Gebern zur Datenübertragung verbundener Sender für die Positionsdaten und die Daten des aktuellen Fahrtrichtungsvektors vorgesehen und der zumindest eine Verkehrsleitrechner oder ein mit dem Verkehrsleitrechner funktional verbundener Computer ist mit einem Empfänger für die Positionsdaten und die Fahrtrichtungsvektordaten zur Datenübertragung verbunden. Auf dem zumindest einen Verkehrsleitrechner oder dem mit dem Verkehrsleitrechner funktional verbundenen Computer ist ein Computerprogramm ablaufbar gespeichert, das zumindest den Schritt d) und den Schritt d') des erfindungsgemäßen Verfahrens ausführt. Der Verfahrensschritt c) kann im fahrzeugseitigen mobilen Endgerät und/oder im Verkehrsleitrechner oder in dem mit dem Verkehrsleitrechner funktional verbundenen Computer durchgeführt werden.

Diese Vorrichtung gestattet auf besonders vorteilhafte Weise die Umsetzung des erfindungsgemäßen Verfahrens, wobei sich lediglich an Bord des Einsatzfahrzeugs eine entsprechende Hard- und Software befinden muss, die in der Lage ist, die Positions- und Fahrtrichtungsdaten zu ermitteln und an den Verkehrsleitrechner oder den mit dem Verkehrsleitrechner funktional verbundenen Computer zu übersenden. Der Verkehrsleitrechner oder der mit dem Verkehrsleitrechner funktional verbundene Computer selbst benötigt lediglich eine zusätzliche Software, um aufgrund dieser vom Einsatzfahrzeug übermittelten Daten die Ampelschaltung entlang der prognostizierten Fahrtroute des zumindest einen Einsatzfahrzeugs und im Bereich der "grünen Wolke" zu beeinflussen. Die einzelnen Wechsellichtzeichenanlagen selbst müssen nicht mit zusätzlicher Hard- oder Software ausgestattet werden, wodurch die Kosten für den Betreiber des Verkehrswegenetzes niedrig bleiben.

Weitere bevorzugte und vorteilhafte Ausgestaltungsmerkmale der erfindungsgemäßen Vorrichtung sind Gegenstand der Unteransprüche 13 und 14.

Von besonderem Vorteil ist es, wenn der Positionsdatengeber und der Fahrtrichtungsvektordatengeber sowie der mit diesen Gebern zur Datenübertragung verbundene Sender in einem Einsatzcomputer, vorzugsweise einem tragbaren mobilen Endgerät, vorgesehen sind. Dadurch können die bereits weiter oben beschriebenen Kostenvorteile durch Ausnutzung vorhandener Smartphones erzielt werden.

Dabei ist es von Vorteil, wenn eine Navigationssoftware auf dem Einssatzcomputer ablaufbar gespeichert ist, mit der eine prognostizierte Fahrtroute zwischen der aktuellen Position und einem vorgegebenen Fahrtziel ermittelbar ist, und wenn der Einsatzcomputer ausgebildet ist, um die die prognostizierte Fahrtroute repräsentierenden Daten mittels des Senders an den Verkehrsleitrechner oder den mit dem Verkehrsleitrechner funktional verbundenen Computer zu übertragen. Hierdurch kann einerseits ein beispielsweise in einem Smartphone schon vorhandenes Navigationsprogramm genutzt werden und zusätzlich wird der Verkehrsleitrechner oder der mit dem Verkehrsleitrechner funktional verbundene Computer nicht mit der Navigationsberechnung belastet.

Schließlich ist die Erfindung gemäß Patentanspruch 15 auch auf ein Computerprogrammprodukt gerichtet, das zur Durchführung eines Verfahrens gemäß der vorliegenden Erfindung ausgestaltet ist.

Dazu umfasst das Computerprogrammprodukt ein erstes Computerprogramm, das den Schritt b) ausführt und das auf einem einsatzfahrzeugseitigen Einsatzcomputer, vorzugsweise einem mobilen Endgerät, ablaufbar speicherbar ist, ein zweites Computerprogramm, das die Schritte d) und d') ausführt und das auf einem Verkehrsleitrechner oder einem mit einem Verkehrsleitrechner funktional verbundenen Computer ablaufbar speicherbar ist, wobei das erste Computerprogramm und/oder das zweite Computerprogramm ausgebildet sind, um den Schritt c) auszuführen, und wobei das erste Computerprogramm und das zweite Computerprogramm ausgebildet sind, um zum Zweck der Datenübertragung, vorzugsweise verschlüsselt über eine gegen Manipulation gesicherte Funkstrecke, miteinander zu kommunizieren.

Ein solches Computerprogrammprodukt besteht somit aus im Wesentlichen zwei Teilen, nämlich einem ersten Teil, der in einem entsprechenden Computergerät an Bord des Einsatzfahrzeugs lauffähig gespeichert ist, und einem zweiten Teil, der im Verkehrsleitrechner oder in einem mit diesem funktional verbundenen Computer lauffähig gespeichert ist. Bei dem im Einsatzfahrzeug vorgesehenen Teil des Computerprogrammprodukts kann es sich beispielsweise um eine App handeln, die auf einem mitgeführten mobilen Endgerät oder in einem Fahrzeug-Navigationssystem des Einsatzfahrzeugs abläuft. Für den dem Verkehrsleitrechner zugeordneten Teil des Computerprogrammprodukts kann beispielsweise eine eigenständige Programmschicht in einem Mehrschicht-Modell einer Verkehrsleitsoftware vorgesehen sein.

Bevorzugte Ausführungsbeispiele der Erfindung mit zusätzlichen Ausgestaltungsdetails und weiteren Vorteilen sind nachfolgend unter Bezugnahme auf die beigefügten Zeichnungen näher beschrieben und erläutert.

### KURZE BESCHREIBUNG DER ZEICHNUNGEN

Es zeigt:
- Fig. 1: eine schematische Blockdiagrammdarstellung des erfindungsgemäßen Verfahrens;
- Fig. 2: die Topologie eines Ausschnitts aus einem innerstädtischen Straßennetz, das Bestandteil des Verkehrswegenetzes ist;
- Fig. 2A: einen ersten Ausschnitt aus Fig. 2
- Fig. 2B: einen zweiten Ausschnitt aus Fig. 2

### DARSTELLUNG VON BEVORZUGTEN AUSFÜHRUNGSBEISPIELEN

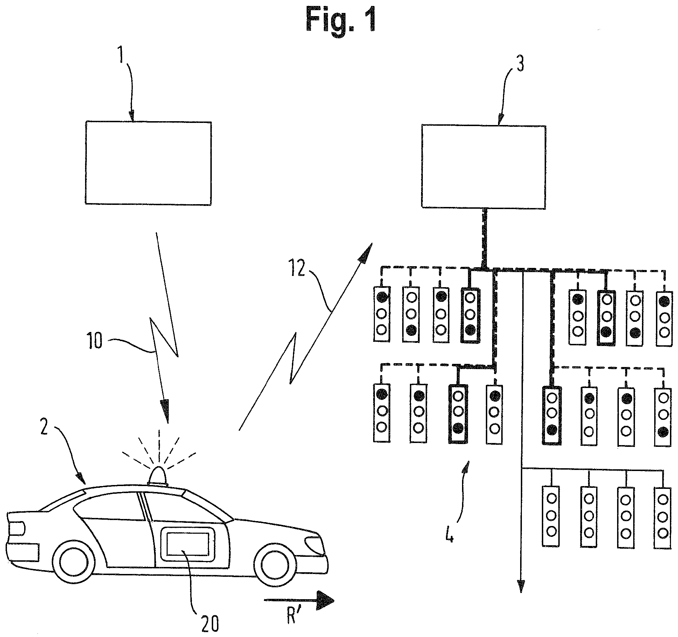

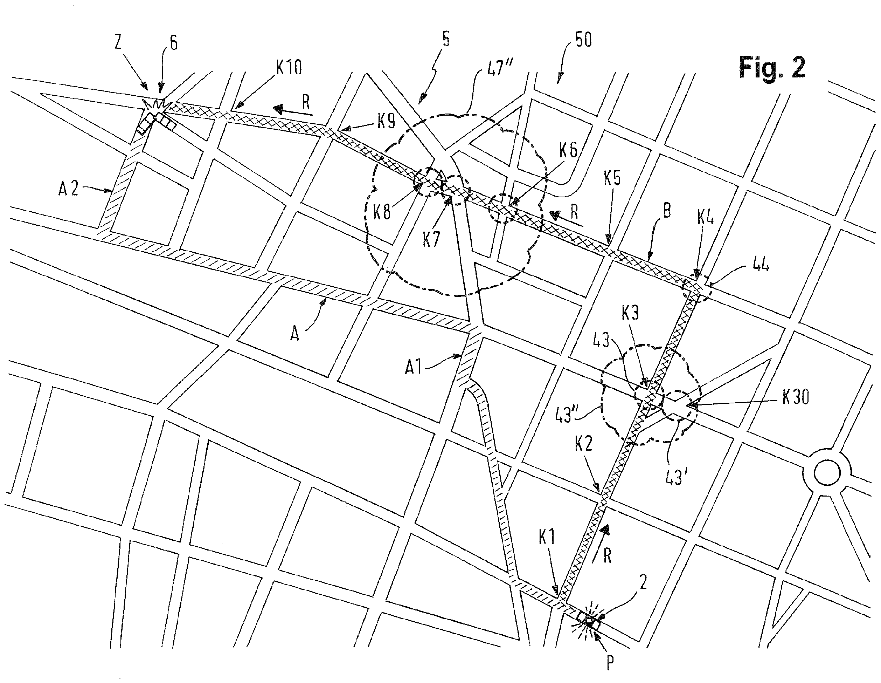

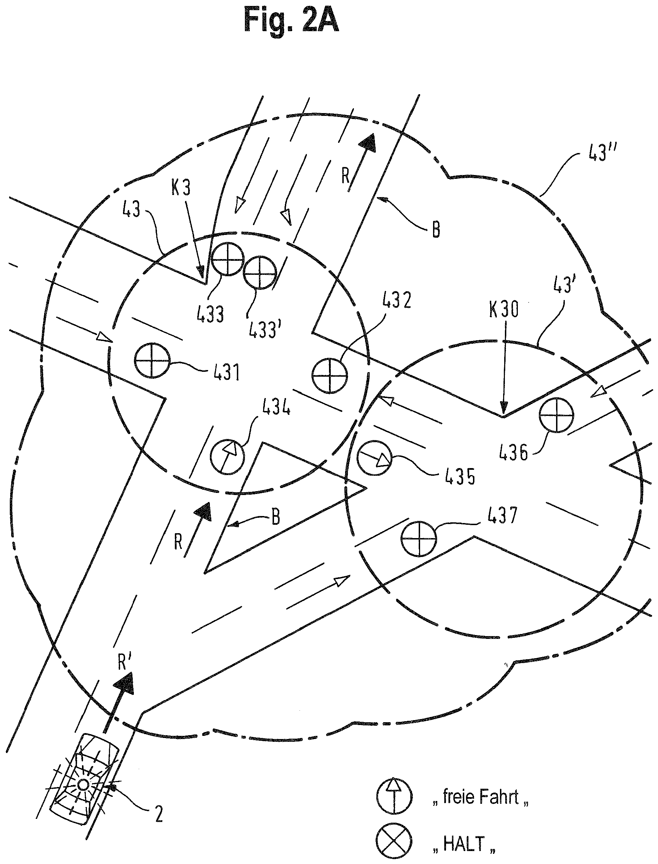

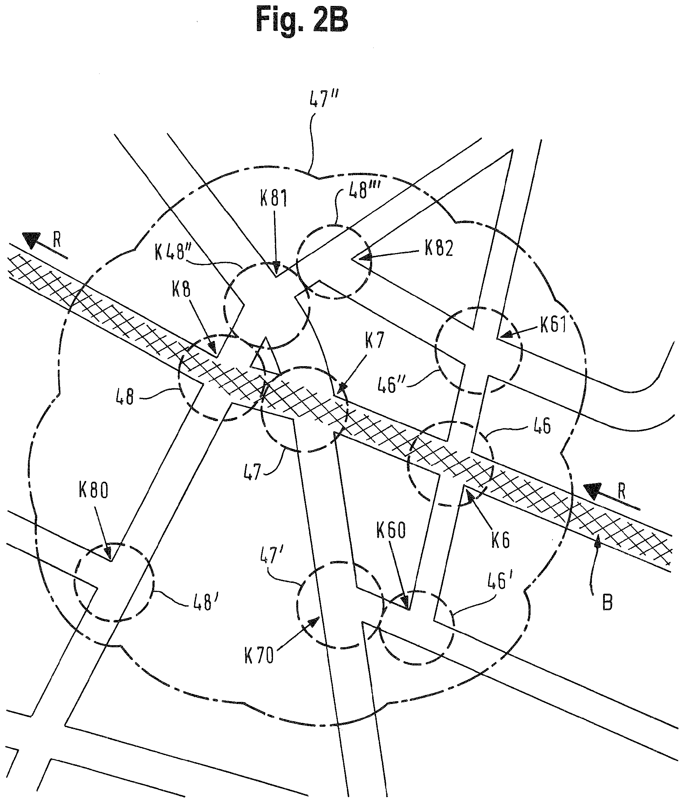

In Fig. 1 ist ein stark vereinfachter schematischer Aufbau eines Systems zur Beeinflussung eines Verkehrsleitsystems zum Zweck einer Vorrangsteuerung für ein Einsatzfahrzeug mit Wegerecht dargestellt. Die wesentlichen Bestandteile dieses Systems umfassen eine Einsatzzentrale 1, zumindest ein Einsatzfahrzeug 2, zumindest einen zentralen Verkehrsleitrechner 3 und eine Vielzahl von mit dem zentralen Verkehrsleitrechner 3 verbundenen Wechsellichtzeichenanlagen 4, die in einem vom Verkehrsleitrechner 3 kontrollierten Verkehrswegenetz 5 (Fig. 2) vorgesehen sind, um den fließenden Verkehr zu regeln. Das Einsatzfahrzeug 2 bewegt sich in diesem Verkehrswegenetz 5, wie weiter unten noch in Verbindung mit Fig. 2 beschrieben wird.

Im Falle eines Einsatzes erhält das Einsatzfahrzeug 2 beziehungsweise das Einsatzpersonal im Einsatzfahrzeug 2 von der Einsatzzentrale 1 einen Einsatzbefehl mit den Daten des Einsatzortes 6 (Fig. 2), also des Fahrtziels Z für das Einsatzfahrzeug 2. Diese Daten werden beispielsweise über eine erste Funkstrecke 10 von der Einsatzleitzentrale 1 an das Einsatzfahrzeug 2 übertragen. An Bord des Einsatzfahrzeugs 2 ist ein Einsatzcomputer 20 vorhanden, der die über die Funkstrecke 10 übermittelten Informationen über den Einsatzort 6 und das Fahrtziel Z empfängt. Dieser Einsatzcomputer 20 kann fest im Einsatzfahrzeug 2 eingebaut sein, vorzugsweise wird der Einsatzcomputer 20 jedoch von einem Tabletcomputer oder einem Mobilfunkgerät, beispielsweise einem Smartphone, gebildet, auf dem ein Einsatz-Computerprogramm abläuft. Der Einsatzcomputer 20 verfügt darüber hinaus über einen Positionsdatengeber und einen Fahrtrichtungsvektordatengeber sowie über einen mit diesen Gebern zur Datenübertragung verbundenen Sender.

Der Einsatzcomputer 20 ist mit einer Navigationssoftware versehen oder hat Zugriff auf einen an Bord des Einsatzfahrzeugs 2 befindlichen Navigationscomputer, um die jeweils aktuelle Position P des Einsatzfahrzeugs 2 sowie dessen Fahrtrichtungsvektor R' bestimmen zu können. Des Weiteren wird anhand der bekannten Fahrtzieldaten ein Vorschlag für eine Fahrtroute vom aktuellen Standort des Einsatzfahrzeugs zum Fahrtziel Z von der Navigationssoftware beziehungsweise dem Navigationsgerät berechnet.

Der Einsatzcomputer 20 an Bord des Einsatzfahrzeugs 2 meldet nach Erhalt des Einsatzbefehls in zeitlich regelmäßigen oder in geschwindigkeitsabhängig unregelmäßigen zeitlichen Intervallen seinen aktuellen Standort P und seinen aktuellen Fahrtrichtungsvektor R' zusammen mit den Einsatz autorisierenden Authentifizierungsdaten mittels des eingebauten Senders verschlüsselt über eine gegen Manipulation gesicherte zweite Funkstrecke 12 an den mit einem entsprechenden Empfänger ausgestatteten oder verbundenen Verkehrsleitrechner 3. Auch die Daten über die an Bord des Einsatzfahrzeugs 2 ermittelte vorgeschlagene Fahrtroute werden in der gleichen Weise als Daten einer "prognostizierten Fahrtroute" über die zweite Funkstrecke 12 zum Verkehrsleitrechner 3 übermittelt. Alternativ kann die Ermittlung der neuen prognostizierten Fahrtroute auch auf dem Verkehrsleitrechner 3 erfolgen.

Nach Überprüfung der Authentifizierungsinformation durch den Verkehrsleitrechner 3 beeinflusst dieser die für die prognostizierte Fahrtrichtung R des Einsatzfahrzeugs 2 entlang der prognostizierten Fahrtroute relevanten Wechsellichtzeichenanlagen derart, dass die jeweilige Wechsellichtzeichenanlage vor oder bei der prognostizierten Ankunft des Einsatzfahrzeugs 2 den Verkehr in Richtung der prognostizierten Fahrtroute freigibt, schaltet also eine grüne Welle für die prognostizierte Fahrtrichtung R des Einsatzfahrzeugs 2 entlang der prognostizierten Fahrtroute. Diese Beeinflussung der einzelnen Wechsellichtzeichenanlagen zur Bildung einer grünen Welle ist durch die dickeren Verbindungslinien zwischen dem Verkehrsleitrechner 3 und einigen (dick umrandet dargestellten) der Wechsellichtzeichenanlagen der in Fig. 1 gezeigten Vielzahl 4 von Wechsellichtzeichenanlagen symbolisiert.

Vorher oder parallel zur vorstehend beschriebenen Einrichtung einer grünen Welle für das Einsatzfahrzeug 2 werden weitere Wechsellichtzeichenanlagen in der Umgebung der vor dem Einsatzfahrzeug 2 gelegenen, die Fahrtrichtung der prognostizierten Fahrtroute betreffenden Wechsellichtzeichenanlagen derart (grün oder rot) geschaltet, dass in einem Fahrkorridor für das zumindest eine Einsatzfahrzeug auf der Fahrbahn der prognostizierten Fahrtroute befindlichen Fahrzeuge den Fahrkorridor verlassen können bevor das Einsatzfahrzeug 2 diesen Ort erreicht. Dies können beispielsweise Fahrzeuge des Gegenverkehrs, des Querverkehrs oder im Fahrkorridor befindliche stehende oder abbiegewillige Fahrzeuge sein. Zudem kann diese zusätzliche Verkehrsbeeinflussung bewirken, dass Fahrzeuge nicht in in den Fahrkorridor hinein fahren können, bis das zumindest eine Einsatzfahrzeug diesen Ort passiert hat. Diese zusätzliche Beeinflussung der Wechsellichtzeichenanlagen in der Umgebung ist in Fig. 1 durch gestrichelte dicke Verbindungslinien zwischen dem Verkehrsleitrechner 3 und einzelnen Wechsellichtzeichenanlagen der Vielzahl 4 von Wechsellichtzeichenanlagen des Verkehrswegenetzes 5 symbolisiert. Andere Wechsellichtzeichenanlagen des vom Verkehrsleitrechner 3 gesteuerten Verkehrswegenetzes 5 werden von der Vorrangsteuerung nicht beeinflusst.

Die Art und Weise, wie eine solche Vorrangsteuerung für zumindest ein Einsatzfahrzeug durch Beeinflussung von Wechsellichtzeichenanlagen in der Umgebung der unmittelbar die Fahrtrichtung betreffenden Wechsellichtzeichenanlagen erfolgt, wird nachstehend anhand der Fig. 2 erläutert.

In Fig. 2 ist schematisch die Topologie eines Straßennetzes 50 gezeigt, das Teil eines städtischen Verkehrswegenetzes 5 ist. Das Verkehrswegenetz 5 kann neben dem Straßennetz 50 beispielsweise auch noch das Netz von innerstädtischen Straßenbahnen sowie ein Netz von auf eigenständigen Spuren fahrenden Bussen des öffentlichen Nahverkehrs und bei Bedarf sogar auch durch das Straßennetz 50 führende Eisenbahnstrecken umfassen. Die Aufgabe des Einsatzfahrzeuges 2 besteht darin, von seinem jetzigen Standort P am unteren Bildrand der Fig. 2 zu einem am linken oberen Bildrand gelegenen Einsatzort 6 zu fahren, an dem sich beispielsweise ein Verkehrsunfall ereignet hat. Dieser Einsatzort 6 stellt gleichzeitig auch das Fahrtziel Z für das Einsatzfahrzeug dar.

Der Navigationscomputer an Bord des Einsatzfahrzeugs 2 ermittelt als kürzeste Fahrtstrecke zum Einsatzort 6 die schräg schraffierte Fahrtroute A. Diese Fahrtroute A weist jedoch zwei für das schnelle Vorankommen des Einsatzfahrzeugs 2 kritische Abschnitte auf, nämlich den Abschnitt A1, an welchem das Einsatzfahrzeug von einer Seitenstraße in eine Hauptstraße nach rechts einbiegen und wenig später an einer Kreuzung nach links abbiegen muss. In dieser Hauptstraße verlaufen beispielsweise die Schienen einer Straßenbahn auf der Fahrbahn und es befindet sich in diesem Bereich eine Straßenbahnhaltestelle. Der Fahrer des Einsatzfahrzeugs 2 kennt diese Schwachstelle und weiß, dass er hier mit einer Verzögerung seiner Fahrt rechnen muss. Des Weiteren vermutet der Fahrer des Einsatzfahrzeugs 2, dass im Abschnitt A2 der Fahrtstrecke A, also in der auf den Unfallort zu führenden Straße, aufgrund des dort regelmäßig auftretenden hohen Verkehrsaufkommens, bereits ein Stau entstanden sein dürfte.

Der Fahrer des Einsatzfahrzeugs 2 entscheidet sich daher, an der nächsten Kreuzung K1 abzubiegen und die gekreuzt schraffierte alternative Fahrtroute B zu wählen. Im Augenblick des Abbiegens des Einsatzfahrzeugs 2 an der Kreuzung K1 registriert das an Bord des Einsatzfahrzeugs 2 befindliche Navigationssystem beziehungsweise die auf dem Einsatzcomputer 20 ablaufende Navigationssoftware die Richtungsänderung des Einsatzfahrzeugs 2 und meldet die aktuellen Positionsdaten und die Daten des neuen Fahrtrichtungsvektors R' an den Verkehrsleitrechner 3. Es wird eine neue prognostizierte Fahrtroute B für das Einsatzfahrzeug 2 ermittelt und diese neuen prognostizierten Fahrtroutendaten werden ebenfalls an den Verkehrsleitrechner 3 übermittelt. Der Verkehrsleitrechner 3 weiß daher, dass das Einsatzfahrzeug 2 in Kürze die Kreuzung K2 überfahren wird und schaltet dort die Ampeln für die prognostizierte Fahrtrichtung R des Einsatzfahrzeugs 2 auf grün. Auch die die prognostizierte Fahrtrichtung R des Einsatzfahrzeugs 2 betreffenden Ampeln an der darauffolgenden Kreuzung K3 werden auf grün geschaltet.

Der Bereich der Kreuzung K3 weist jedoch eine komplexe Verkehrsführung auf, da sich unmittelbar neben der Kreuzung K3 eine weitere Kreuzung K30 befindet, die ebenfalls ampelgesteuert ist. Hier treten oft Rückstauungen vor den Wechsellichtzeichenanlagen an der Kreuzung K30 auf, die bis in die Kreuzung K3 hineinreichen. Daher ist es nicht ausreichend, wenn die die prognostizierte Fahrtrichtung R des Einsatzfahrzeugs 2 betreffenden Wechsellichtzeichenanlagen der Kreuzung K3 auf grün geschaltet werden, sondern es muss vorher dafür gesorgt werden, dass der sich in die Kreuzung K3 vor der Wechsellichtzeichenanlage der Kreuzung K30 rückstauende Verkehr die Kreuzung K3 verlassen kann.

Hierzu werden, wie in Fig. 2A stark vergrößert dargestellt ist, die Wechsellichtzeichenanlagen 431, 432, die den in die Kreuzung K3 hinein fließenden Querverkehr regeln, auf "HALT" geschaltet, was durch einen Kreis mit Kreuz symbolisiert ist. Ist an der Kreuzung K3 auf der Fahrbahn der prognostizierten Fahrtrichtung R das Linksabbiegen zulässig, wird auch der Geradeaus fahrende Gegenverkehr mittels der Wechsellichtzeichenanlage 433 angehalten. Dadurch können Linksabbieger die Fahrbahn der prognostizierten Fahrtrichtung R verlassen und für das Einsatzfahrzeug 2 frei machen. Auch der über die Fahrbahn der prognostizierten Fahrtroute B führende Linksabbiegerverkehr aus der Gegenrichtung wird durch die auf "HALT" geschaltete Wechsellichtzeichenanlage 433' angehalten, während die Wechsellichtzeichenanlage 434, die die Fahrtrichtung R des Einsatzfahrzeugs 2 auf der prognostizierten Fahrtroute B betrifft, auf "freie Fahrt" geschaltet wird, was durch den Geradeaus-Pfeil im Kreis symbolisiert ist. Auf diese Weise ist die Gruppe 43 von Wechsellichtzeichenanlagen, die unmittelbar die Kreuzung K3 betrifft, so geschaltet, dass keine die Fahrbahn der prognostizierten Fahrtroute R des Einsatzfahrzeugs 2 blockierenden Verkehrsströme in die Kreuzung K3 hineinfließen und eventuell im Fahrkorridor auf der Fahrbahn der prognostizierten Fahrtroute R befindliche wartende Fahrzeuge den Fahrkorridor verlassen können.

Eine Steuerung der Gruppe 43 von Wechsellichtzeichenanlagen unmittelbar an der Kreuzung K3 ist im vorliegenden Fall jedoch nicht ausreichend, da durch die unmittelbar benachbarte Kreuzung K 30 mit der dort befindlichen Gruppe 43' von Wechsellichtzeichenanlagen der Verkehr auf der Kreuzung K 3 dahingehend negativ beeinflusst wird, dass es häufig zu Rückstauungen des Querverkehrs kommt, der bis in die Kreuzung K3 hinein reicht. Die erfindungsgemäße Beeinflussung der Wechsellichtzeichenanlagen durch das Verkehrsleitsystem wird nun im Bereich der Kreuzung K3 über die Gruppe 43 von Wechsellichtzeichenanlagen hinaus auch auf die Gruppe 43' von Wechsellichtzeichenanlagen der benachbarten Kreuzung K30 ausgedehnt.

Der Wirkungsbereich 43" der Vorrangsteuerung erweitert sich also von der die Kreuzung K 3 betreffenden Gruppe 43 von Wechsellichtzeichenanlagen auf die der benachbarten Kreuzung K30 zugeordnete Gruppe 43' von Wechsellichtzeichenanlagen. Dies erfolgt in der Form, dass der aus der Kreuzung K3 herausführende Verkehr über die Kreuzung K30 durch die auf "freie Fahrt" geschaltete Wechsellichtzeichenanlage 435 der benachbarten Kreuzung K30 abfließen kann, so dass die Kreuzung K3 geräumt wird. Die Wechsellichtzeichenanlage 436 und 437 der Gruppe 43', die den Querverkehr bezüglich des vorgenannten abfließenden Verkehrs regeln, sind dazu auf "HALT" geschaltet.

Auf diese Weise wird also der Wirkungsbereich 43" der Beeinflussung der Wechsellichtzeichenanlagen von der Kreuzung K3 auf die Kreuzung K30 ausgedehnt, indem zwei Gruppen 43, 43' von Wechsellichtzeichenanlagen in die Sondersteuerung zur Vorranggewährung durch den Verkehrsleitrechner 3 einbezogen werden. Die beschriebene Steuerung der Wechsellichtzeichenanlagen der Gruppe 43' sorgt für ein Abfließen des Verkehrs aus der Kreuzung K3 und die beschriebene Steuerung der Wechsellichtzeichenanlagen der Gruppe 43 verhindert ein weiteres Hineinfließen von Verkehr in die Kreuzung K3, so dass die Kreuzung K3 bei Ankunft des Einsatzfahrzeugs 2 geräumt ist und das Einsatzfahrzeug 2 die Kreuzung K3 ohne wesentliche verkehrsbedingte Verringerung seiner Geschwindigkeit überfahren kann.

Hat das Einsatzfahrzeug 2 die Kreuzung K3 überfahren, so muss es an der darauf folgenden Kreuzung K4 links abbiegen. Dieser Abbiegewunsch ist dem Verkehrsleitrechner 3 aufgrund der prognostizierten Fahrtroute B bekannt, so dass der Verkehrsleitrechner die Gruppe 44 der Wechsellichtzeichenanlagen an der Kreuzung K4 entsprechend schalten kann. Dazu werden nicht nur die Wechsellichtzeichenanlagen der Gruppe 44 für den Querverkehr auf "HALT" geschaltet, sondern auch die Wechsellichtzeichenanlagen für den Gegenverkehr und für den Fußgängerverkehr werden auf "HALT" geschaltet, so dass nur die die Fahrtroute des Einsatzfahrzeugs betreffende Wechsellichtzeichenanlage auf "freie Fahrt" geschaltet ist. Das Einsatzfahrzeug kann so ohne verkehrsbedingte Verringerung seiner Geschwindigkeit an der Kreuzung K4 links abbiegen. An der darauf folgenden Kreuzung K5 wird wiederum in bereits beschriebener Weise eine grüne Welle für das Einsatzfahrzeug 2 geschaltet.

Die folgenden Kreuzungen K6, K7 und K8 auf der prognostizierten Fahrtroute B des Einsatzfahrzeugs 2 sind Teil eines topologisch komplexeren Straßensystems mit einer Vielzahl von neben der prognostizierten Fahrtroute B gelegenen Kreuzungen und Straßeneinmündungen, die ebenfalls mit Wechsellichtzeichenanlagen versehen sind. Auf ähnliche Weise, wie dies in Verbindung mit der Steuerung der Wechsellichtzeichenanlagen des Wirkungsbereichs 43" um die Kreuzungen K3 und K30 herum beschrieben worden ist, wird im Bereich der Kreuzungen K6, K7 und K8 ein größerer Wirkungsbereich 47" definiert, der die in diesem Bereich befindlichen Gruppen von Wechsellichtzeichenanlagen umfasst, nämlich die Gruppe 46 der Kreuzung K6 mit den Gruppen 46' und 46" der der Kreuzung K6 benachbarten Kreuzungen beziehungsweise Straßeneinmündungen K60 und K61, der Kreuzung K7 mit ihrer Gruppe 47 sowie der Gruppe 47' der der Kreuzung K7 benachbarten Straßeneinmündung K70 und der Gruppe 48 der Kreuzung K8 sowie der Gruppe 48' an der der Kreuzung K8 benachbarten Straßeneinmündung K80 und der Gruppen 48" und 48'" der der Kreuzung K8 benachbarten Kreuzung K81 und der darauf folgenden Straßeneinmündung K82. In diesem Wirkungsbereich 47" erfolgt ebenfalls eine Steuerung der in diesem Wirkungsbereich 47" gelegenen Wechsellichtzeichenanlagen, die darauf gerichtet ist, ein Hineinfließen von Verkehr in den Fahrkorridor auf der Fahrbahn der prognostizierten Fahrtroute B zu verhindern und die gleichzeitig dafür sorgt, dass Fahrzeuge, die sich im Fahrkorridor auf der Fahrbahn entlang der Fahrtroute B in Fahrtrichtung R des Einsatzfahrzeugs 2 befinden, diese Fahrbahn verlassen können.

Bei den beiden darauf folgenden Kreuzungen K9 und K10 ist es wiederum ausreichend, lediglich die Wechsellichtzeichenanlagen der jeweiligen Kreuzung K9 beziehungsweise K10 zu beeinflussen und eine grüne Welle für das Einsatzfahrzeug zu schalten.

Das erfindungsgemäße Verfahren zur Beeinflussung eines Verkehrsleitsystems sorgt somit dafür, dass das zumindest eine Einsatzfahrzeug entlang seiner prognostizierten Route nicht nur eine grüne Welle vorfindet, sondern außerdem einen von die Fahrt des Einsatzfahrzeugs abbremsenden Verkehrssituationen (Verkehrsstauungen, stehender Querverkehr, wartender Abbiegeverkehr usw.) befreiten Fahrkorridor vorfindet, so dass das Einsatzfahrzeug seine Fahrt mit deutlich höherer Fahrgeschwindigkeit durchführen kann als dies bisher der Fall ist und somit den Einsatzort schneller erreicht. Gleichzeitig wird dadurch das Unfallrisiko für das Einsatzfahrzeug herabgesenkt, da keine oder kaum noch "störende" Fahrzeuge in dem für das Einsatzfahrzeug 2 befreiten Fahrkorridor unterwegs sind.

Die beschriebenen Verkehrssituationen, in denen die Anwendung des erfindungsgemäßen Verfahrens eine Beschleunigung der Einsatzfahrt des zumindest einen Einsatzfahrzeugs 2 und eine Reduktion des Unfallrisikos bewirkt, sind lediglich beispielhaft angeführt. Es kann das erfindungsgemäße Verfahren natürlich auch für viele andere Verkehrssituationen und lokale Topologien von Verkehrswegenetzen eingesetzt werden, wobei jedes Mal der Kerngedanke der Erfindung umgesetzt wird, neben der Schaltung einer "grünen Welle" für das Einsatzfahrzeug 2 durch entsprechende Schaltung der Wechsellichtzeichenanlagen im Bereich einer Kreuzung oder Straßeneinmündung oder sogar eines schienengleichen Bahnübergangs sowie in der Umgebung davon den Verkehr deutlich von der Ankunft des Einsatzfahrzeugs so zu beeinflussen, dass der Fahrkorridor in der prognostizierten Fahrtrichtung R des Einsatzfahrzeugs 2 vor Ankunft des Einsatzfahrzeugs 2 leer oder frei gefahren wird und dass gleichzeitig ein Hineinfahren in den Fahrkorridor unterbunden wird. Dadurch findet das Einsatzfahrzeug bei der Annäherung nicht nur die "grüne Welle" vor, sondern auch einen freien Fahrkorridor.

Es ist selbstverständlich, dass die Erfindung nicht auf eine Vorrangsteuerung für ein einzelnes Einsatzfahrzeug beschränkt ist, sondern auch für eine Mehrzahl von Einsatzfahrzeugen, beispielsweise einen Feuerwehr-Löschzug, einsetzbar ist. Ebenso selbstverständlich ist es, dass in einem Verkehrswegenetz, in dem eine Mehrzahl von Einsatzfahrzeugen mit Wegerecht zeitgleich unterwegs ist, Vorkehrungen getroffen sind, die verhindern, dass zwei aus unterschiedlichen Richtungen an eine Kreuzung oder eine Straßeneinmündung heranfahrende Einsatzfahrzeuge gleichzeitig in ihrer jeweiligen Fahrtrichtung eine grüne Ampel vorfinden.

Bezugszeichen in den Ansprüchen, der Beschreibung und den Zeichnungen dienen lediglich dem besseren Verständnis der Erfindung und sollen den Schutzumfang nicht einschränken.

### Es bezeichnen:

- 1: Einsatzzentrale
- 2: Einsatzfahrzeug
- 3: Verkehrsleitrechner
- 4: Vielzahl von Wechsellichtzeichenanlagen
- 43: Wechsellichtzeichenanlagengruppe
- 43': Wechsellichtzeichenanlagengruppe
- 43": Wirkungsbereich der Vorrangsteuerung
- 431: Wechsellichtzeichenanlage
- 432: Wechsellichtzeichenanlage
- 433: Wechsellichtzeichenanlage
- 433': Wechsellichtzeichenanlage
- 434: Wechsellichtzeichenanlage
- 435: Wechsellichtzeichenanlage
- 436: Wechsellichtzeichenanlage
- 437: Wechsellichtzeichenanlage
- 44: Wechsellichtzeichenanlagengruppe
- 46: Wechsellichtzeichenanlagengruppe
- 46': Wechsellichtzeichenanlagengruppe
- 46": Wechsellichtzeichenanlagengruppe
- 47: Wechsellichtzeichenanlagengruppe
- 47': Wechsellichtzeichenanlagengruppe
- 47": Wirkungsbereich
- 48: Wechsellichtzeichenanlagengruppe
- 48': Wechsellichtzeichenanlagengruppe
- 48": Wechsellichtzeichenanlagengruppe
- 48'": Wechsellichtzeichenanlagengruppe
- 5: Verkehrswegenetz
- 6: Einsatzort
- 10: erste Funkstrecke
- 12: zweite Funkstrecke
- 20: Einsatzcomputer
- 50: Straßennetz
- A: Fahrtroute
- A1: Abschnitt Fahrtroute
- A2: Abschnitt Fahrtroute
- B: Fahrtroute
- K1: Kreuzung
- K2: Kreuzung
- K3: Kreuzung
- K4: Kreuzung
- K5: Kreuzung
- K6: Kreuzung
- K7: Kreuzung
- K8: Kreuzung
- K9: Kreuzung
- K10: Kreuzung
- K30: Kreuzung
- K60: Straßeneinmündung
- K61: Straßeneinmündung
- K70: Straßeneinmündung
- K80: Straßeneinmündung
- K81: Kreuzung
- K82: Straßeneinmündung
- P: Position
- R: prognostizierte Fahrtrichtung
- R': Fahrtrichtungsvektor
- Z: Fahrtziel

## Patentansprüche

1. Verfahren zur Beeinflussung eines Verkehrsleitsystems mit einem Verkehrsleitrechner (3), der eine Vielzahl (4) von Wechsellichtzeichenanlagen in einem Verkehrswegenetz (5) steuert, zum Zweck einer Vorrangsteuerung für zumindest ein Einsatzfahrzeug (2) mit Wegerecht, wobei die Beeinflussung des Verkehrsleitsystems auf der Basis von aktuellen Positionsdaten und eines Fahrtrichtungsvektors (R') des zumindest einen Einsatzfahrzeugs (2) erfolgt, um dessen Fahrt auf einer prognostizierten Fahrtroute zu beschleunigen,
mit den Schritten:
a) Bereitstellen von Positionsdaten eines Fahrtziels (Z) für das zumindest eine Einsatzfahrzeug (2);
b) Bereitstellen der aktuellen Positionsdaten und der Daten des aktuellen Fahrtrichtungsvektors (R') des zumindest einen Einsatzfahrzeugs (2);
c) Prognostizieren einer Fahrtroute für das zumindest eine Einsatzfahrzeug (2) von dessen aktueller Position zur Position des Fahrtziels (Z) unter Berücksichtigung der durch den Fahrtrichtungsvektor (R') repräsentierten, vom Fahrer des Einsatzfahrzeugs (2) gewählten Fahrtrichtung;
d) Beeinflussen der eine prognostizierte Fahrtrichtung (R) auf der prognostizierten Fahrtroute betreffenden Wechsellichtzeichenanlagen derart, dass die jeweilige Wechsellichtzeichenanlage vor oder bei der prognostizierten Ankunft des zumindest einen Einsatzfahrzeugs (2) den Verkehr in Richtung der prognostizierten Fahrtroute freigibt,
**dadurch gekennzeichnet,**
**dass** in einem in oder vor dem Schritt d) ausgeführten Schritt d') weitere, nicht unmittelbar die prognostizierte Fahrtrichtung (R) des Einsatzfahrzeugs betreffende Wechsellichtzeichenanlagen in der Umgebung der vor dem Einsatzfahrzeug (2) gelegenen, die prognostizierte Fahrtrichtung (R) auf der prognostizierten Fahrtroute betreffenden Wechsellichtzeichenanlagen derart geschaltet werden, dass in einem Fahrkorridor für das zumindest eine Einsatzfahrzeug auf der Fahrbahn der prognostizierten Fahrtroute befindliche Fahrzeuge den Fahrkorridor verlassen können und keine Fahrzeuge in den Fahrkorridor hinein fahren können bis das zumindest eine Einsatzfahrzeug diesen Ort erreicht, so dass das zumindest eine Einsatzfahrzeug einen Wirkungsbereich der Vorrangsteuerung entlang der prognostizierten Fahrtroute vor sich herschiebt, in welchem zusätzlich zu einer grünen Welle für das zumindest eine Einsatzfahrzeug ein Abfließen des Verkehrs aus dem Fahrkorridor entlang der prognostizierten Fahrtroute weg bewirkt wird.

2. Verfahren nach Anspruch 1,
**dadurch gekennzeichnet,**
**dass** die Schaltung der Wechsellichtzeichenanlagen in der prognostizierten Fahrtrichtung (R) auf der prognostizierten Fahrtroute derart erfolgt, dass Fahrzeuge des Gegenverkehrs und/oder des Querverkehrs oder im Fahrkorridor befindliche abbiegewillige Fahrzeuge den Fahrkorridor verlassen können, bevor das zumindest eine Einsatzfahrzeug (2) diesen Ort erreicht hat.

3. Verfahren nach Anspruch 1 oder 2,
**dadurch gekennzeichnet,**
**dass** die Schaltung der Wechsellichtzeichenanlagen in der prognostizierten Fahrtrichtung (R) auf der prognostizierten Fahrtroute derart erfolgt, dass Fahrzeuge des Querverkehrs oder des Abbiegeverkehrs nicht in den Fahrkorridor hinein fahren können, bis das zumindest eine Einsatzfahrzeug (2) diesen Ort passiert hat.

4. Verfahren nach Anspruch 1, 2 oder 3,
**dadurch gekennzeichnet,**
**dass** die Freigabe des Verkehrs in Richtung der prognostizierten Fahrtroute in Abhängigkeit von der Verkehrsdichte auf der prognostizierten Fahrtroute so rechtzeitig vor der prognostizierten Ankunft des zumindest einen Einsatzfahrzeugs (2) an der jeweiligen die prognostizierte Fahrtrichtung (R) auf der prognostizierten Fahrtroute betreffenden Wechsellichtzeichenanlage erfolgt, dass sich im Fahrkorridor stehende Fahrzeuge in Bewegung setzen können und sich somit stehender Verkehr bei der Ankunft des zumindest einen Einsatzfahrzeugs (2) in fließenden Verkehr gewandelt hat.

5. Verfahren nach einem der vorhergehenden Ansprüche,
**dadurch gekennzeichnet,**
**dass** die Wechsellichtzeichenanlagen entlang der prognostizierten Fahrtroute derart geschaltet werden, dass an einer Straßeneinmündung, an der die prognostizierte Fahrtrichtung (R) der prognostizierten Fahrtroute des zumindest einen Einsatzfahrzeugs (2) in eine einmündende Straße abknickt, Lichtzeichen für zu Fuß Gehende oder für Rad Fahrende zum Beispiel durch Anzeige von Rotlicht auf HALT geschaltet werden, so dass der Fußgängerverkehr und/oder der Fahrradverkehr über die einmündende Straße angehalten wird.

6. Verfahren nach einem der vorhergehenden Ansprüche,
**dadurch gekennzeichnet,**
**dass** die Schritte b) bis d) und d') in zeitlichen Intervallen, vorzugsweise permanent, wiederholt werden.

7. Verfahren nach einem der vorhergehenden Ansprüche,
**dadurch gekennzeichnet,**
**dass** das Bereitstellen der aktuellen Positionsdaten und der Daten des aktuellen Fahrtrichtungsvektors (R') des zumindest einen Einsatzfahrzeugs (2) im Schritt b) auf einem Einsatzcomputer (20), vorzugsweise einem mobilen Endgerät, erfolgt, den eine berechtigte Person als Insasse des zumindest einen Einsatzfahrzeugs (2) mit sich führt, und dass diese Daten zusammen mit Authentifizierungsdaten dieser berechtigten Person an den Verkehrsleitrechner (3) übertragen werden.

8. Verfahren nach Anspruch 7,
**dadurch gekennzeichnet,**
**dass** das Prognostizieren der Fahrtroute für das zumindest eine Einsatzfahrzeug (2) ebenfalls auf dem Einsatzcomputer (20) mittels einer darauf laufenden Navigationssoftware erfolgt und dass die Übertragung der die prognostizierte Fahrtroute repräsentierenden Daten vom Einsatzcomputer (20), vorzugsweise von einem mobilen Endgerät, zum Verkehrsleitrechner (3) erfolgt.

9. Verfahren nach einem der vorhergehenden Ansprüche,
**dadurch gekennzeichnet,**
- **dass** die aktuellen Positionsdaten und der Fahrtrichtungsvektor (R') des zumindest einen Einsatzfahrzeugs (2) unmittelbar oder mittelbar an autonome Fahrzeuge übertragen werden, die sich auf der prognostizierten Fahrtroute (B) des Einsatzfahrzeugs (2) befinden, und
- **dass** diese autonomen Fahrzeuge dadurch veranlasst werden, die Fahrbahn der prognostizierten Fahrtroute zu räumen oder gar nicht erst zu befahren.

10. Verfahren nach Anspruch 9,
**dadurch gekennzeichnet,**
**dass** die Übertragung der aktuellen Positionsdaten und des Fahrtrichtungsvektors (R') des zumindest einen Einsatzfahrzeugs (2) an autonome Fahrzeuge mittelbar über zumindest einen zentralen Telematikrechner erfolgt, mit dem die autonomen Fahrzeuge zur Datenübertragung verbunden sind.

11. Verfahren nach Anspruch 9 oder 10,
**dadurch gekennzeichnet,**
**dass** die Übertragung der aktuellen Positionsdaten und des Fahrtrichtungsvektors (R') des zumindest einen Einsatzfahrzeugs (2) an autonome Fahrzeuge direkt vom Einsatzfahrzeug aus erfolgt.

12. Vorrichtung zur Durchführung des Verfahrens nach einem der vorhergehenden Ansprüche, mit einem Verkehrsleitsystem, das zumindest einen Verkehrsleitrechner (3) und eine Vielzahl (4) von Wechsellichtzeichenanlagen in einem Verkehrswegenetz (5) aufweist, wobei der Verkehrsleitrechner (3) die Wechsellichtzeichenanlagen im Verkehrswegenetz (5) steuert,
**dadurch gekennzeichnet,**
- **dass** in dem zumindest einen Einsatzfahrzeug (2) mit Wegerecht, dessen Fahrt auf einer prognostizierten Fahrtroute (B) mittels des Verfahrens beschleunigt werden soll, zumindest ein Positionsdatengeber und ein Fahrtrichtungsvektordatengeber sowie ein mit diesen Gebern zur Datenübertragung verbundener Sender für die Positionsdaten und die Daten des aktuellen Fahrtrichtungsvektors vorgesehen ist,
- **dass** der zumindest eine Verkehrsleitrechner (3) oder ein mit dem Verkehrsleitrechner (3) funktional verbundener Computer mit einem Empfänger für die Positionsdaten und die Fahrtrichtungsvektordaten zur Datenübertragung verbunden ist und
- **dass** auf dem zumindest einen Verkehrsleitrechner (3) oder dem mit dem Verkehrsleitrechner funktional verbundenen Computer ein Computerprogramm ablaufbar gespeichert ist, das zumindest den Schritt d) und den Schritt d') des Verfahrens gemäß einem der vorhergehenden Ansprüche ausführt.

13. Vorrichtung nach Anspruch 12,
**dadurch gekennzeichnet,**
**dass** der Positionsdatengeber und der Fahrtrichtungsvektordatengeber sowie der mit diesen Gebern zur Datenübertragung verbundene Sender in einem Einsatzcomputer (20), vorzugsweise einem tragbaren mobilen Endgerät, vorgesehen sind.

14. Vorrichtung nach Anspruch 13,
**dadurch gekennzeichnet,**
**dass** eine Navigationssoftware auf dem Einsatzcomputer (20) ablaufbar gespeichert ist, mit der eine prognostizierte Fahrtroute zwischen der aktuellen Position und einem vorgegebenen Fahrtziel (Z) ermittelbar ist, und dass der Einsatzcomputer (20) ausgebildet ist, um die die prognostizierte Fahrtroute repräsentierenden Daten mittels des Senders an den Verkehrsleitrechner (3) oder den mit dem Verkehrsleitrechner (3) funktional verbundenen Computer zu übertragen.

15. Computerprogrammprodukt zur Durchführung eines Verfahrens gemäß einem der Ansprüche 1 bis 11, umfassend
- ein erstes Computerprogramm, das den Schritt b) ausführt und das auf einem einsatzfahrzeugseitigen Einsatzcomputer (20), vorzugsweise einem mobilen Endgerät, ablaufbar speicherbar ist,
- ein zweites Computerprogramm, das die Schritte d) und d') ausführt und das auf einem Verkehrsleitrechner (3) oder einem mit einem Verkehrsleitrechner (3) funktional verbundenen Computer ablaufbar speicherbar ist,
- wobei das erste Computerprogramm und/oder das zweite Computerprogramm ausgebildet sind, um den Schritt c) auszuführen, und
- wobei das erste Computerprogramm und das zweite Computerprogramm ausgebildet sind, um zum Zweck der Datenübertragung, vorzugsweise verschlüsselt über eine gegen Manipulation gesicherte Funkstrecke (12), miteinander zu kommunizieren.

## Claims

1. A method for influencing a traffic management system with a traffic control computer (3) which controls a plurality (4) of alternating light signal systems in a traffic network (5) for the purpose of a priority control for at least one emergency vehicle (2) with right of way, wherein the influencing of the traffic management system takes place on the basis of current position data and a direction of travel vector (R') of the at least one emergency vehicle (2) in order to accelerate its travel on a projected travel route, the process comprising the steps of:
a) providing position data of a destination (Z) for the at least one emergency vehicle (2);
b) providing the current position data and the data of the current direction of travel vector (R') of the at least one emergency vehicle (2);
c) predicting a route of travel for the at least one emergency vehicle (2) from its current position to the position of the destination (Z), taking into account the direction of travel selected by the driver of the emergency vehicle (2) and represented by the direction of travel vector (R');
d) influencing the alternating light signal systems concerning a projected direction of travel (R) on the projected travel route in such a way that the respective alternating light signal system gives way for the traffic in the direction of the projected travel route before or on the predicted arrival of the at least one emergency vehicle (2),
**chacterized,**
in that in a step d') carried out in or before step d) further alternating light signals systems which do not directly relate to the projected direction of travel (R) of the emergency vehicle and which are located in the surroundings of the alternating light signal systems in front of the emergency vehicle concerning the projected direction of travel (R) on the projected travel route, are switched in such a manner that vehicles located in a driving corridor of the at least one emergency vehicle on the lane of the projected travel route can leave the driving corridor and that no vehicles can enter the driving corridor until the at least one emergency vehicle arrives at this location, so that the at least one emergency vehicle pushes a sphere of influence of the priority control along the projected travel route, in which sphere of influence a drain of traffic away from the driving corridor is effected along the projected travel route in addition to a green wave.

2. A method according to claim 1
**characterized,**
**in that** the switching of the alternating light signal systems in the projected direction of travel (R) on the projected travel route is carried out such that vehicles of the oncoming traffic and/or the cross traffic or vehicles in the driving corridor having the intention to turn can leave the driving corridor before the at least one emergency vehicle (2) arrives at this location.

3. A method according to claim 1 or 2
**characterized,**
**in that** the switching of the alternating light signal systems in the projected direction of travel (R) on the projected travel route is carried out such that vehicles of the cross traffic or of the turning traffic cannot enter the driving corridor before the at least one emergency vehicle (2) has passed this location.

4. A method according to claim 1, 2 or 3,
**characterized,**
**in that** the traffic in the direction of the projected travel route is given way depending on the traffic density on the projected travel route in good time before the forecast arrival of the at least one emergency vehicle (2) at the respective alternating light signal system concerning the projected direction of travel (R) on the projected travel route, so that vehicles standing in the driving corridor can be put in motion and traffic jam has changed into moving traffic when the at least one emergency vehicle (2) arrives.

5. A method according to one of the proceeding claims,
**characterized,**
**in that** the alternating light signal systems along the projected travel route are switched in such a manner that at a road junction at which the projected direction of travel (R) of the projected travel route of the at least one emergency vehicle (2) bends into a side road, light signals for pedestrians or bicyclists are switched to STOP by indicating red light so that the pedestrian traffic and/or the bicyclist traffic over the side street is stopped.

6. A method according to one of the preceding claims,
**characterized,**
**in that** the steps b) to d) and d') are repeated in timely intervals, preferably permanently.

7. A method according to one of the preceding claims,
**characterized,**
**in that** the provision of the current position data and the data of the current direction of travel vector (R') of the at least one emergency vehicle (2) in step b) is carried out on an operations computer (20), preferably a mobile terminal carried by an authorized person being a passenger of the at least one emergency vehicle (2) and
**in that** these data are transmitted together with authentication data of this authorized person to the traffic control computer (3).

8. A method according to claim 7,
**characterized,**
**in that** the prediction of the route of travel for the at least one emergency vehicle (2) is carried out also on the operations computer (20) by means of a navigation software running on the operations computer and in that the transmission of the data representing the projected travel route is carried out from the operations computer (20), preferably from a mobile terminal, to the traffic control computer (3).

9. A method according to one of the preceding claims,
**characterized,**
- **in that** the current position data and the direction of travel vector (R') of the at least one emergency vehicle (2) are transmitted directly or indirectly to autonomous vehicles located on the projected travel route (B) of the emergency vehicle (2), and
- **in that** these autonomous vehicles are thereby caused to clear the lane of the projected travel route or not even entering the lane of the projected travel route.

10. A method according to claim 9,
**characterized,**
**in that** the transmission of the current position data and the direction of travel vector (R') of the at least one emergency vehicle (2) to autonomous vehicles is carried out indirectly via at least one central telematics computer to which the autonomous vehicles are connected for the purpose of data transmission.

11. A method according to claim 9 or 10,
**characterized,**
**in that** the transmission of the current position data and the direction of travel vector (R') of the at least one emergency vehicle (2) to autonomous vehicles is carried out directly from the emergency vehicle.

12. A device for carrying out the method according to one of the preceding claims with a traffic management system comprising at least one traffic control computer (3) and a plurality (4) of alternating light signal systems in a traffic network (5), wherein the traffic control computer (3) controls the alternating light signal systems in the traffic network (5),
**characterized,**
- **in that** at least one position data transducer and a direction of travel vector data transducer as well as a transmitter for the position data and the data of the current direction of travel vector connected to these transducers for the purpose of data transmission is provided in the at least one emergency vehicle (2) with right of way, the travel of which is to be accelerated on a projected travel route (B) by means of said method,
- **in that** the at least one traffic control computer (3) or a computer functionally connected to the traffic control computer (3) is connected to a receiver for the position data and the direction of travel vector data for the purpose of data transmission and
- **in that** a computer program is executably stored on the at least one traffic control computer (3) or the computer functionally connected to the traffic control computer, wherein the computer program carries out at least step d) and step d') of the method according to one of the preceding claims.

13. A device according to claim 12,
**characterized,**
**in that** the position data transducer and the direction of travel vector data transducer as well as the transmitter connected to these transducers for the purpose of data transmission is provided in an operations computer (20), preferably in a portable mobile terminal.

14. A device according to claim 13,
**characterized,**
**in that** a navigation software is executably stored on the operations computer (20), wherein a projected travel route between the current position and a predefined destination (Z) can be calculated by the navigation software, and in that the operations computer (20) is adapted to transmit the data representing the projected travel route by means of the transmitter to the traffic control computer (3) or to the computer which is functionally connected to the traffic control computer.

15. A computer program product for carrying out a method according to one of the claims 1 to 11, comprising
- a first computer program which carries out step b) and which is executably storable on an operations computer (20), preferably a mobile terminal, on the emergency vehicle side,
- a second computer program carrying out steps d) and d') which is executably storable on a traffic control computer (3) or on a computer functionally connected to a traffic control computer (3),
- wherein the first computer program and/or the second computer program are adapted to carry out step c) and
- wherein the first computer program and the second computer program are adapted to intercommunicate for the purpose of data transmission, preferably encrypted via a radio link (12) which is protected against manipulation.

## Revendications

1. Procédé pour influencer un système de gestion de trafic comportant un ordinateur de régulation de trafic (3) qui commande une pluralité (4) d'installations de signalisation lumineuse alternée dans un réseau de voies de circulation (5), pour une commande de priorité pour au moins un véhicule d'intervention (2) avec droit de passage, le système de gestion de trafic étant influencé sur la base de données de position actuelle et d'un vecteur de direction de déplacement (R') dudit au moins un véhicule d'intervention (2) afin d'accélérer son déplacement sur un itinéraire prévu, comportant les étapes consistant à :
a) mettre à disposition des données de position d'une destination (Z) dudit au moins un véhicule d'intervention (2) ;
b) mettre à disposition les données de position actuelle et les données du vecteur de direction de déplacement actuel (R') dudit au moins un véhicule d'intervention (2) ;
c) prévoir un itinéraire pour ledit au moins un véhicule d'intervention (2) de sa position actuelle à la position de la destination (Z) en tenant compte de la direction de déplacement représentée par le vecteur de direction de déplacement (R'), choisie par le conducteur du véhicule d'intervention (2) ;
d) influencer les installations de signalisation lumineuse alternée relatives à une direction de déplacement prévue (R) sur l'itinéraire prévu de telle sorte que l'installation de signalisation lumineuse alternée respective libère le trafic dans la direction de l'itinéraire prévu avant ou à l'arrivée prévue dudit au moins un véhicule d'intervention (2),
**caractérisé en ce**
**que**, dans une étape d') exécutée dans ou avant l'étape d), d'autres installations de signalisation lumineuse alternée non directement relatives à la direction de déplacement prévue (R) du véhicule d'intervention, aux alentours des installations de signalisation lumineuse alternée situées devant le véhicule d'intervention (2) et relatives à la direction de déplacement prévue (R) sur l'itinéraire prévu, sont commutées de telle sorte que des véhicules situés dans un couloir de circulation dudit au moins un véhicule d'intervention sur la voie de circulation de l'itinéraire prévu puissent quitter le couloir de circulation et qu'aucun véhicule ne puisse entrer dans le couloir de circulation avant que ledit au moins un véhicule d'intervention n'atteigne cet endroit, de sorte que ledit au moins un véhicule d'intervention pousse devant lui une zone d'influence de la commande de priorité le long de l'itinéraire prévu, dans laquelle, en plus d'une onde verte pour ledit au moins un véhicule d'intervention, le trafic est amené à s'écarter du couloir de circulation le long de l'itinéraire prévu.

2. Procédé selon la revendication 1,
**caractérisé en ce**
**que** la commutation des installations de signalisation lumineuse alternée dans la direction de déplacement prévue (R) sur l'itinéraire prévu est effectuée de telle sorte que les véhicules du trafic venant en sens inverse et/ou du trafic transversal ou les véhicules qui se trouvent dans le couloir de circulation et veulent s'en écarter puissent quitter le couloir de circulation avant que ledit au moins un véhicule d'intervention (2) ait atteint cet endroit.

3. Procédé selon la revendication 1 ou 2,
**caractérisé en ce**
**que** la commutation des installations de signalisation lumineuse alternée dans la direction de déplacement prévue (R) sur l'itinéraire prévu est effectuée de telle sorte que les véhicules du trafic transversal ou du trafic tournant ne peuvent pas entrer dans le couloir de circulation avant que ledit au moins un véhicule d'intervention (2) ait passé cet endroit.

4. Procédé selon la revendication 1, 2 ou 3,
**caractérisé en ce**
**que** la libération du trafic dans la direction de l'itinéraire prévu est effectuée en fonction de la densité du trafic sur l'itinéraire prévu de telle sorte qu'avant l'arrivée prévue dudit au moins un véhicule d'intervention (2) à l'installation de signalisation lumineuse alternée respective relative à la direction de déplacement prévue (R) sur l'itinéraire prévu, les véhicules se trouvant à l'arrêt dans le couloir de circulation puissent se mettre en mouvement et que le trafic à l'arrêt soit ainsi transformé en trafic fluide lors de l'arrivée dudit au moins un véhicule d'intervention (2).

5. Procédé selon l'une des revendications précédentes,
**caractérisé en ce**
**que** les installations de signalisation lumineuse alternée sont commutées le long de l'itinéraire prévu de telle sorte qu'à un carrefour où la direction de déplacement prévue (R) de l'itinéraire prévu dudit au moins un véhicule d'intervention (2) bifurque dans une rue latérale, les signaux lumineux pour les piétons ou les cyclistes sont mis à STOP, par exemple par affichage d'un feu rouge, afin que la circulation des piétons et/ou des cyclistes sur la rue latérale soit arrêtée.

6. Procédé selon l'une des revendications précédentes,
**caractérisé en ce**
**que** les étapes b) à d) et d') sont répétées à intervalles réguliers, de préférence de manière permanente.

7. Procédé selon l'une des revendications précédentes,
**caractérisé en ce**
**que** la mise à disposition des données de position actuelle et des données du vecteur de direction de déplacement actuel (R') dudit au moins un véhicule d'intervention (2) à l'étape b) est effectuée sur un ordinateur d'intervention (20), de préférence un terminal mobile, qu'une personne autorisée emporte en tant qu'occupant dudit au moins un véhicule d'intervention (2), et
**que** ces données sont transmises à l'ordinateur de régulation de trafic (3) avec les données d'authentification de cette personne autorisée.

8. Procédé selon la revendication 7,
**caractérisé en ce**
**que** la prévision de l'itinéraire dudit au moins un véhicule d'intervention (2) est également effectuée sur l'ordinateur d'intervention (20) au moyen d'un logiciel de navigation s'exécutant sur celui-ci, et que la transmission des données représentant l'itinéraire prévu à l'ordinateur de régulation de trafic (3) est effectuée par l'ordinateur d'intervention (20), de préférence par un terminal mobile.

9. Procédé selon l'une des revendications précédentes,
**caractérisé en ce**
- **que** les données de position actuelle et le vecteur de direction de déplacement (R') dudit au moins un véhicule d'intervention (2) sont transmis directement ou indirectement à des véhicules autonomes qui se trouvent sur l'itinéraire prévu (B) du véhicule d'intervention (2), et
- **que** ces véhicules autonomes sont ainsi amenés à quitter ou à ne pas emprunter du tout la voie de circulation de l'itinéraire prévu.

10. Procédé selon la revendication 9,
**caractérisé en ce**
**que** la transmission des données de position actuelle et du vecteur de direction de déplacement (R') dudit au moins un véhicule d'intervention (2) à des véhicules autonomes est effectuée indirectement par l'intermédiaire d'au moins un ordinateur télématique central auquel les véhicules autonomes sont reliés dans un but de transmission de données.

11. Procédé selon la revendication 9 ou 10,
**caractérisé en ce**
**que** la transmission des données de position actuelle et du vecteur de direction de déplacement (R') dudit au moins un véhicule d'intervention (2) à des véhicules autonomes est effectuée directement à partir du véhicule d'intervention.

12. Dispositif pour mettre en œuvre le procédé selon l'une des revendications précédentes, comprenant un système de gestion de trafic qui présente au moins un ordinateur de régulation de trafic (3) et une pluralité (4) d'installations de signalisation lumineuse alternée dans un réseau de voies de circulation (5), l'ordinateur de régulation de trafic (3) commandant les installations de signalisation lumineuse alternée dans le réseau de voies de circulation (5),
**caractérisé en ce**
- **qu'**au moins un générateur de données de position et un générateur de données de vecteur de direction de déplacement ainsi qu'un émetteur relié à ces générateurs pour la transmission des données de position et des données du vecteur de direction de déplacement actuel sont prévus dans ledit au moins un véhicule d'intervention (2) avec droit de passage, dont le déplacement sur un itinéraire prévu (B) doit être accéléré au moyen du procédé,
- **que** ledit au moins un ordinateur de régulation de trafic (3) ou un ordinateur fonctionnellement relié à l'ordinateur de régulation de trafic (3) est relié à un récepteur pour les données de position et les données de vecteur de direction de déplacement pour la transmission de données, et
- **qu'**un programme informatique qui exécute au moins l'étape d) et l'étape d') du procédé selon l'une des revendications précédentes est stocké sous forme exécutable sur ledit au moins un ordinateur de régulation de trafic (3) ou l'ordinateur fonctionnellement relié à l'ordinateur de régulation de trafic.

13. Dispositif selon la revendication 12,
**caractérisé en ce**
**que** le générateur de données de position et le générateur de données de vecteur de direction de déplacement ainsi que l'émetteur relié à ces générateurs pour la transmission de données sont prévus dans un ordinateur d'intervention (20), de préférence un terminal mobile portable.

14. Dispositif selon la revendication 13,
**caractérisé en ce**
**qu'**un logiciel de navigation est stocké sous forme exécutable sur l'ordinateur d'intervention (20), avec lequel un itinéraire prévu entre la position actuelle et une destination prédéfinie (Z) peut être déterminé, et que l'ordinateur d'intervention (20) est conçu pour transmettre les données représentant l'itinéraire prévu au moyen de l'émetteur à l'ordinateur de régulation de trafic (3) ou à l'ordinateur fonctionnellement relié à l'ordinateur de régulation de trafic (3).

15. Produit programme informatique pour mettre en oeuvre un procédé selon l'une des revendications 1 à 11, comprenant :
- un premier programme d'ordinateur qui exécute l'étape b) et qui peut être stocké sous forme exécutable sur un ordinateur d'intervention (20) côté véhicule d'intervention, de préférence un terminal mobile,
- un deuxième programme d'ordinateur qui exécute les étapes d) et d') et qui peut être stocké sous forme exécutable sur un ordinateur de régulation de trafic (3) ou un ordinateur fonctionnellement relié à un ordinateur de régulation de trafic (3),
- dans lequel le premier programme d'ordinateur et/ou le deuxième programme d'ordinateur sont conçus pour exécuter l'étape c), et
- dans lequel le premier programme d'ordinateur et le deuxième programme d'ordinateur sont conçus pour communiquer entre eux dans un but de transmission de données, de préférence cryptée, par une liaison radio (12) protégée contre les manipulations.
